# EUROPEAN PATENT SPECIFICATION

(11) **EP 2 106 507 B1**
(45) Date of publication and mention of the grant of the patent: **02.03.2016**
(21) Application number: 06841197.4
(22) Date of filing: 28.12.2006
(51) Int. Cl.: F16B 12/18

(54) **TIGHTENING APPARATUS AND METHOD FOR TIGHTENING TWO PIECES OF FURNITURE**
FESTZIEHVORRICHTUNG UND VERFAHREN ZUM FESTZIEHEN VON ZWEI MÖBELSTÜCKEN
APPAREIL DE SERRAGE ET PROCÉDÉ DE SERRAGE DE DEUX PIÈCES DE MOBILIER

(43) Date of publication of application: 07.10.2009
(73) Proprietor: Carrier Corporation, Farmington, CT 06034-4015 (US)
(72) Inventor: SCHMUCK, Stefan, 63526 Erlensee (DE); GROM, Armin, 65843 Sulzbach (DE)
(74) Representative: Klunker . Schmitt-Nilson . Hirsch
(86) International application number: PCT/EP2006/012583
(87) International publication number: WO 2008/080424

(56) References cited:
- GB-A- 2 307 511
- US-A- 231 126
- US-A- 4 130 262

## Description

There is often a requirement for coupling articles.

US 231 126 A discloses a device for holding hand glass firmly upon an extension-arm, which may be readily adjusted to any height upon the mirror-frame. A hand glass may be placed in any desired position with reference to the mirror, and at such a distance from it that the person may have a clear view and remain in their place until the operation has been completed. The devide comprises an extension-arm, which is formed of a series of short lengths so jointed together that they may be elongated or folded upon themselves, and they may be turned to form any curve or to stand at any point within the radius of their length, in a manner similar to gas-jet brackets. In order to secure this device to the mirror- frame and allow it to be adjusted to any height, a clamp is formed, which consists of a plate having one end horizontal and flats, so that the inner arm of the extension may be pivoted to it. The other end of the plate is forked and bent at right angles, so that the two forked ends will pass behind the mirror-frame. The other jaw of the clamp has its width narrower than the distance between the forks, so that when forced against the frame its pressure is exerted between the ends of the fork, and will thus cause it to be much firmer than if the jaws were plain and of equal size. The jaw has a stem which passes through a slot in the plate, and has a nut upon the opposite side, through which a screw turns. By means of this screw- the jaw is set firmly up against the mirror-frame.

US 4 130 262 A according to an adjustable clamp, which is specially adapted to support fragile panels of various thicknesses, for example display panels in electronic calculators, includes two overlying, interfitting, L-shaped members together with an anchor screw. A panel is held in an adjustable space between the arms of one portion of each L. The arms in the other portion of each L interfit through a set of interdigital bands and apertures formed in the respective arms. The interfitting arms are slideably adjustable relative to each other. The anchor screw, which can attach the clamp and held panel to a support surface such as a printed circuit board, passes between the interfitting arms to secure them together while simultaneously causing their relative sliding movement to produce the adjustable clamping action.

For coupling furnitures such as refrigerating furnitures screws and threaded bars have been used so far. The locations for screw-connection of that type are not easily accessible in refrigerating furniture which makes such screw connections complicated, elaborate, time-consuming and correspondingly expensive.

Accordingly, it would be beneficial to provide a coupling means which overcomes such disadvantages.

The invention includes an tightening apparatus kit for tightening two pieces of furniture towards each other, according to claim 1.

The invention further includes a tightening apparatus comprising three parts including said first and second cooperating members and said tightening actuator according to said tightening apparatus kit.

The invention further includes a method of tightening towards each other in a tightening direction two pieces of furniture each of which comprises a counter locking structure, comprising the steps of providing a tightening apparatus as mentioned above; bringing the locking structure of one of the cooperating elements in locking engagement with the counter locking structure of one of the two pieces of furniture; bringing the locking structure of the other one of the cooperating elements in locking engagement with the counter locking structure of the other one of the two pieces of furniture; and actuating the tightening actuator to cause a relative movement of said cooperating members in said tightening direction.

In exemplary embodiments of the invention, each of said cooperating members has a plate-shaped portion and the locking structure of each cooperating member is formed as a locking projection, both of the locking projections extending into the same direction from the respective plate-shaped cooperating member.

In exemplary embodiments of the invention, both locking projections are formed as locking flaps designed and dimensioned to be received within locking slots provided at the respective article.

In exemplary embodiments of the invention, the plate-shaped portions of both cooperating members are made from sheet metal, each of the locking flaps being cut free and bend away from the respective sheet metal.

In exemplary embodiments of the invention, an angle between the plate-shaped portion and the respective locking flap is in a range from 30° to 90°.

In exemplary embodiments of the invention, said tightening actuator is a screw bolt having a bolt head and a bolt portion, at least an end section of the bolt portion having an outside thread, the bolt head and the threaded end section cooperating with a respective one of said actuator engagement structures for causing a tightening movement of the cooperating members upon rotating the screw bolt.

In exemplary embodiments of the invention, one lug is provided with an internal thread being complementary to the thread of the threaded end section of the screw bolt and the other lug is provided with a through hole dimensioned to receive the bolt portion in a sliding fit but not allowing the bolt head to pass.

In exemplary embodiments of the invention, said lugs and the locking flaps extend from the plate-shaped portions in different directions which are substantially opposite to each other.

In exemplary embodiments of the invention, the first cooperating member is provided with a pair of parallel spaced apart guiding rails and the second cooperating member is provided with a pair of parallel spaced apart guiding rail followers adapted for being in gliding engagement with the guiding rails for a relative movement in the tightening direction.

In exemplary embodiments of the invention, the guiding rails are formed by the edges of a cut out of the plate-shaped portion of the first cooperating member and the guiding rail followers comprise a middle pair and two outside pairs of transverse side arms of the plate-shaped portion of the second cooperating member, wherein the transverse side arms have a transverse dimension which is larger than the transverse dimension of the cut out and the transverse side arms of the middle pair on the one hand and the transverse side arms of the outside pairs on the other hand are structured to cooperate with opposite surfaces of the respectively adjacent guiding rails.

In exemplary embodiments of the invention, the cut out has a transversally enlarged portion allowing the passing through of the transverse middle side arms.

In exemplary embodiments of the invention, the plate shaped portion of the first cooperating member is provided with a reinforcing structure.

In exemplary embodiments of the invention, the reinforcing structure comprises at least one oblong embossment extending in a substantially longitudinal direction of the first cooperating member, said direction being similar to the tightening direction.

Embodiments of the invention are described in greater detail below with reference to the Figures, wherein:
Figure 1 shows a perspective view from top and one longitudinal side of an embodiment of a tightening apparatus in accordance with the present invention;
Figure 2 shows an elevation side view of the tightening apparatus of Figure 1 seen from the right side in Figure 1;
Figure 3 shows a front end elevation of the tightening apparatus, seen from the left side in Figure 1;
Figure 4 shows a top view of the tightening apparatus, seen from above in Figure 1; and
Figure 5 shows the tightening apparatus as illustrated in Figure 2, mounted on two pieces of furniture.

The tightening apparatus according to the present invention can be used for tightening towards each other adjacent articles of many types, e.g. boxes, chests, coffers, wardrobes, cabinets, shelves, and is particularly envisioned for coupling together refrigerating furniture.

The Figures show a tightening apparatus 11 comprising a first cooperating member 13 and a second cooperating member 15. In the embodiment illustrated in the Figures, both cooperating members 13 and 15 comprise plate shaped body portions 17 and 19, respectively. In an embodiment of the present invention, both plate shaped body portions 17 and 19 are made of sheet metal by stamping and bending the respective body portion from sheet metal blanks.

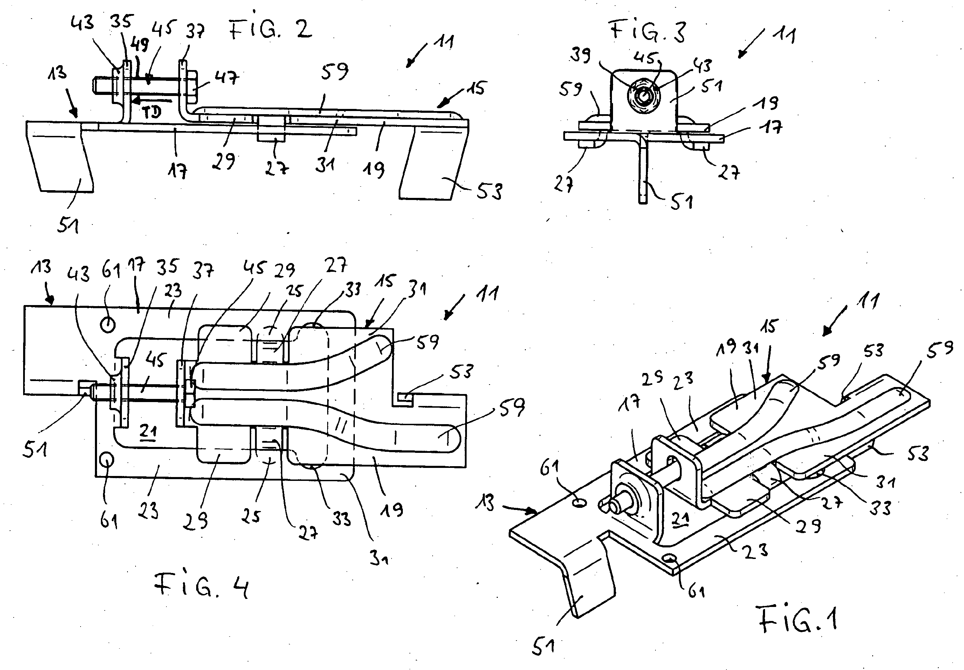

In all of the Figures, both cooperating members 13 and 15 are illustrated in a state in which they are mounted to each other such that they can be moved relative to each other in a longitudinal direction which also is a tightening direction in which the two articles are to be moved to be tightened together. As best seen in Figure 4, the plate shaped body portion 17 of the first cooperating member 13 has a central cut out 21. Two longitudinal sides of the cut out 21 form a pair of parallel spaced apart guiding rails 23.

The plate shaped body portion 19 of the second cooperating member 15 has three pairs of transverse side arms having a transverse dimension which is larger than the transverse distance of the guiding rails 23. Free ends 25 of a middle pair 27 of the transverse side arms are shaped in such a way that they extend below the lower surface of the guiding rails 23, if seen in Figure 4. Two outside pairs 29 and 31 of the transverse side arms are positioned to be above the upper surface of the guiding rails 23 if seen in Figure 4. Thus each of the guiding rails 23 is received between two outer side arms 29 and 31 on its upper surface and the middle side arm 27 below its lower surface (seen in Figure 4). Therefore, the plate shaped body portion 19 of the second cooperating member 15 forms a slide which is moveable relative to the first cooperating member 13 in the longitudinal or tightening direction.

For mounting the second cooperating member 15 on the first cooperating member 13, the cut out 21 is provided with a transverse enlargement 33 at its right hand side, if seen in Figure 4. The dimension of the enlargement 33 is adapted to allow the free ends 25 of the middle transverse side arms 27 to pass the guiding rails 23 in a direction orthogonal to the plane of the body portion 17 of the first cooperating member 13.

After inserting the middle side arms 27 through the transverse enlargement 33 of the cut out 21, the second cooperating member 15 can be moved relative to the first cooperating member 13 like a slide, with guidance by the guide mechanism formed by the cooperation of the guiding rails 23 and the transverse side arms 27, 29 and 31.

At the left hand side (seen in Figure 4) of the cut out 21 and the left hand side (seen in Figure 4) of the outer transverse side arms 29, each of the cooperating members 13 and 15, respectively is provided with an engagement structure for engagement with a tightening actuator adapted to be actuated to cause a relative movement of the cooperating members 13 and 15 in the tightening direction indicated by means of an arrow TD in Figure 2. In the embodiment illustrated in the Figures, the engagement structure of each cooperating member 13, 15 is formed by means of a lug 35 (first cooperating member 13) and 37 (second cooperating member 15). Both lugs 35 and 37 extend substantially upright from the plate shaped body portion 17 and 19, respectively. Both lugs 35 and 37 have a through whole 39 and 41, respectively (Figure 1). The through whole 39 of lug 35 of the first cooperating member 13 is provided with an internal thread whereas the through whole 41 of the second cooperating member 15 is an elongated whole without a thread. The thread of lug 35 is formed in an axial protuberance 43 so that the axial length of the thread is larger than the thickness of lug 35.

A screw bolt 45 which forms a tightening actuator, having a bolt head 47 and a threaded bolt portion 49 as an axial length such that its outside thread can be screwed into the inside thread of through whole,39 if the second cooperating member 15 is in its position relative to the first cooperating member 13 as shown in Figure 4, i.e. if the free ends 25 of the middle transverse arms 27 are in engagement with the lower surface (seen in Figure 4) of the guiding rails 23.

In the Figures, there is illustrated a position of the screw bolt 45 relative to the lugs 35 and 37, in which the bolt portion 49 is screwed into the inside thread of lug 35 to such an extent that the bolt head 47 abuts the lug 37. The through whole 41 in lug 37 is dimensioned to allow an easy axial movement of the bolt portion 49 through the through whole 41.

By rotating the screw bolt 45 clockwise by means of a (not shown) tool from the position shown in Figure 2, lug 37 is moved towards lug 35, with the effect that the second cooperating member 15 is moved towards lug 35.

The plate shaped body portions 17 and 19 of the cooperating members 13 and 15 each are provided with a locking flap 51 and 53, respectively. In the embodiment illustrated in the Figures, the locking flaps 51 and 53 are positioned at longitudinal end portions at the remote longitudinal ends of both cooperating members 13 and 15. In the embodiment illustrated in the Figures, each locking flap 51 and 53 is formed by a cut part cut free from the respective longitudinal end of the blank used for forming the cooperating member 13 and 15, respectively, and by bending the respective cut free portion towards the lower surface of the plate shaped body portion 17 and 19, respectively, if seen in Figure 4. In the embodiment illustrated in the Figures, each locking flap 51 has a rectangular form, but could have different forms, e.g. the shape of a hook.

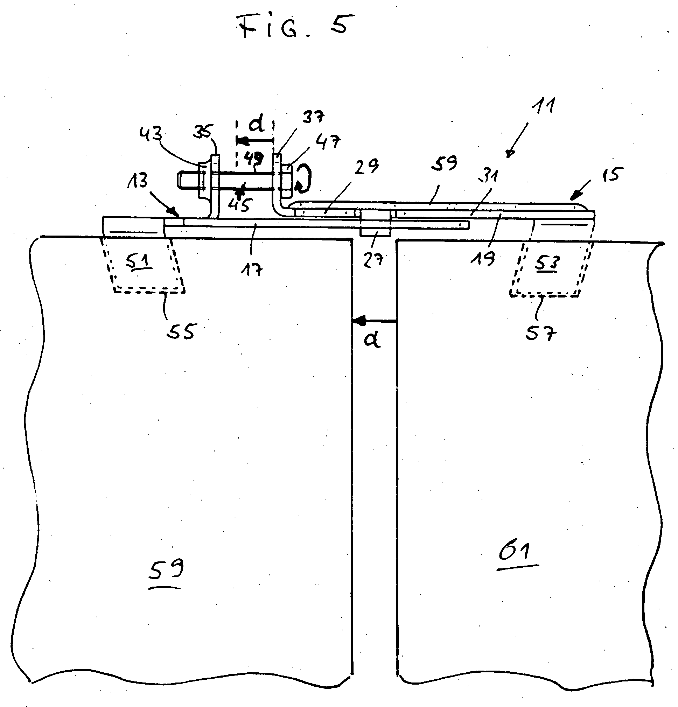

As schematically illustrated in Figure 5, the locking flaps 51 and 53 are shaped to be brought into engagement with a respective locking slot 55 and 57, respectively, extending into a first piece of furniture 59 and a second piece of furniture 61, respectively, from a respective surface thereof. The shapes and dimensions of the locking flaps 51, 53 and the locking slots 55 and 57 are such that the locking flaps 51, 53 can easily be inserted into the locking slots 55 and 57 and well be held within the slots when the locking flap 53 is moved towards the locking flap 51 by rotating the screw bolt 45 in a clockwise direction. Such screwing of the screw bolt 45 is continued until the second piece of furniture 61 is moved towards the first piece of furniture 59 by a distance d, i.e. until the adjacent vertical walls of both pieces of furniture 59, 61 abut each other. This is the case, if rotation of the screw bolt 45 in clockwise direction has caused the lug 37 to move by the distance d towards the lug 35.

As illustrated in the Figures, the plate-shaped body portion 19 of the second cooperating member 15 is provided with a reinforcing structure extending in general in the longitudinal direction of the second cooperating member 15 and preventing the plate-shaped body portion 19 of the second cooperating member 15 from deformation which otherwise might be caused by the load the second piece of furniture 61 provides to the second cooperating member 15 during the tightening movement of the second piece of furniture 61. In an embodiment of the present invention, the reinforcing structure is formed by two substantially longitudinal embossments 59 extending from the upper surface (seen in Figure 4) of the plate-shaped body portion 19. The two embossments 59 are parallel where they cross the pairs of transverse side arms 27 and 29 and they diverge from each other along the longitudinal length of the outside pair of transverse arms 31 which extend to the step like longitudinal end of the second cooperating member 15 where the locking flap 53 thereof is positioned.

In the embodiment illustrated in Figure 5, the locking slots 55 and 57 are provided at upper parts of the furniture 59 and 61. In particular in case of refrigerating furniture, e.g. refrigerating cases or cabinets, it is very convenient to couple and tighten the two pieces of furniture 59 and 61 by positioning both pieces of furniture 59, 61 close to each other, inserting the locking flaps 51 and 53 into the respective locking slot 55 and 57, respectively and then to actuate the screw bolt 45 until the piece of furniture 61 is moved by the distance d and both pieces of furniture 51, 59 are tightened to each other. If the screw bolt 45 is left in the rotating position reached then, the tightening apparatus 11 permanently functions as a coupling apparatus.

If the material of the respective piece of furniture provided with the locking slot 55 and 57, respectively, is not sufficiently resistant against the tightening forces exerted by the locking flaps 51, 53, the material of the furniture where it has the locking slots 55, 57 might be reinforced, e.g. by embedding into the respective piece of furniture a plug of sufficiently stable material provided with the respective locking slot 55, 57.

In the embodiment illustrated in the Figures, the plate-shaped body portion 17 of the first cooperating member 13 is provided with two mounting through holes 61 which can be used for fixing the first cooperating member 13 to the respective piece of furniture 59, e.g. by means of screws or nails. In that case, the first cooperating member 13 can be pre-assembled with the associated piece of furniture 59 and the second cooperating member 15 can then be mounted to the first cooperating member 13 at the time of setting up and coupling the two pieces of furniture 59, 61.

Figure 3 illustrates an embodiment wherein the two locking flaps 51, 53 extend perpendicular from the respective plate-shaped body portions 17 and 19, respectively. However, other angles between the plate-shaped body portions 17 and 19, respectively, could be chosen, e.g. in a range from 30° to 90° from the lower surface (seen in the Figures) of the respective plate-shaped body portion 17 and 19, respectively.

The cooperating members can have a shape which is different from the plate-shaped form illustrated in the Figures. For instance, the body portions of both cooperating members might have a cylindrical shape with one body portion having a receptacle form and the other body portion having a plug form, e.g. with a kind of coaxial relationship between both body portions. Instead of a cylindrical shape, both body portions might have a box-shaped form or other form which is suitable for a telescopic relative movement of both cooperating members.

It is an advantage of the tightening apparatus of the present invention that there is no need of inserting threaded bars through adjacent side walls of adjacent pieces of furniture for coupling and tightening them together. Instead, the locking flaps of both cooperating members need to be inserted into the respective locking slots at the upper surface of the respective piece of furniture, and the tightening actuator in form of the screw bolt needs to be rotated only for a tightening movement of the one piece of furniture. Both actions can be done very easily and conveniently from the outside of both pieces of furniture and the coupling and tightening action requires a relatively short time only, with correspondingly low cost.

## Claims

1. Tightening apparatus kit for tightening two pieces of furniture (59, 61), towards each other, comprising three kit parts including:
a first cooperating member (13) and a second cooperating member (15), said cooperating members (13, 15) being provided with a complementary guiding structure adapted for guiding a relative movement of said cooperating elements relative to each other in a tightening direction (TD); and
a tightening actuator (45) adapted to be actuated to cause said relative movement of said cooperating members (13, 15) in said tightening direction (TD); wherein
each of said cooperating members (13, 15) having a plate-shaped portion (17, 19) and a locking structure (51, 53) adapted for locking engagement with a counter locking structure (55, 57) provided at a respective one of said pieces of furniture (59, 61), and having an engagement structure (35, 37) adapted for engaging with said tightening actuator (45),
wherein the actuator engagement structure (35, 37) of each cooperating member (13, 15) comprises a lug extending substantially upright from the plate-shaped portion (17, 19) with the plate-shaped portions (17, 19) of both cooperating members (13, 15) being made from sheet metal, wherein each lug is cut free and bend away from the sheet metal of the respective plate-shaped portion (17, 19).

2. Tightening apparatus kit according to claim 1 wherein each of said cooperating members (13, 15) has a plate-shaped portion (17, 19) and the locking structure of each cooperating member (13, 15) is formed as a locking projection (51, 53), both of the locking projections (51, 53) extending into the same direction from the respective plate-shaped portion (17, 19).

3. Tightening apparatus kit according to claim 2 wherein both locking projections are formed as locking flaps (51, 53) designed and dimensioned to be received within locking slots (55, 57) provided at the respective piece of furniture (59, 61).

4. Tightening apparatus kit according to claim 3 wherein the plate-shaped portions (17, 19) of both cooperating members (13, 15) are made from sheet metal, each of the locking flaps (51, 53) being cut free and bent away from the respective sheet metal.

5. Tightening apparatus kit according to any of claims 1 to 4 wherein said tightening actuator is a screw bolt (45) having a bolt head (47) and a bolt portion (49), at least an end section of the bolt portion (49) having an outside thread, the bolt head (47) and the threaded end section cooperating with a respective one of said actuator engagement structures (35, 37) for causing a tightening movement of the cooperating members (13, 15) upon rotating the screw bolt (45).

6. Tightening apparatus kit according to any of claims 1 to 5 wherein one lug is provided with an internal thread being complementary to the thread of the threaded end section of the screw bolt (45) and the other lug is provided with a through hole dimensioned to receive the bolt portion in a sliding fit but not allowing the bolt head to pass.

7. Tightening apparatus kit according to claim 6 wherein said lugs and the locking flaps (51, 53) extend from the plate-shaped portions (17, 19) in different directions which are substantially opposite to each other.

8. Tightening apparatus kit according to any of claims 1 to 7 wherein the first cooperating member (13) is provided with a pair of parallel spaced apart guiding rails (23) and the second cooperating member (15) is provided with a pair of parallel spaced apart guiding rail followers (27, 29, 31) adapted for being in gliding engagement with the guiding rails (23) for a relative movement in the tightening direction (TD).

9. Tightening apparatus kit according to claim 8 with the plate-shaped portions (17, 19) of both cooperating members (13, 15) being made from sheet metal, wherein the guiding rails (23) are formed by the edges of a cut out (21) of the plate-shaped portion (17, 19) of the first cooperating member (13) and the guiding rail followers comprise a middle pair (27) and two outside pairs (29, 31) of transverse side arms of the plate-shaped portion (17, 19) of the second cooperating member (15), wherein the transverse side arms (27, 29, 31) have a transverse dimension which is larger than the transverse dimension of the cut out (21) and the transverse side arms (27) of the middle pair on the one hand and the transverse side arms (29, 31) of the outside pairs on the other hand are structured to cooperate with opposite surfaces of the respectively adjacent guiding rails (23).

10. Tightening apparatus kit according to claim 9 wherein the cut out (21) has a transversally enlarged portion (33) allowing the passing through of the middle transverse side arms (27).

11. Tightening apparatus kit according to any of claims 1 to 10 wherein the plate shaped portion (17) of the first cooperating member (13) is provided with a reinforcing structure (59).

12. Tightening apparatus being constituted by said first and second cooperating members (13, 15) and said tightening actuator (45) of the tightening apparatus kit according to any of claims 1 to 11.

13. Method of tightening towards each other in a tightening direction (TD) two pieces of furniture (59, 61) each of which comprises a counter locking structure (55, 57), comprising the steps of:
providing a tightening apparatus (11) according claim 12;
bringing the locking structure (51) of one (13) of the cooperating elements (13, 15) in locking engagement with the counter locking structure (55) of one (59) of the two pieces of furniture (59, 61);
bringing the locking structure (53) of the other one (15) of the cooperating elements (13, 15) in locking engagement with the counter locking structure (57) of the other one (61) of the two pieces of furniture (59, 61); and
actuating the tightening actuator (45) to cause a relative movement of said cooperating members (13, 15) in said tightening direction (TD).

## Patentansprüche

1. Festziehvorrichtungsbausatz zum Festziehen von zwei Möbelstücken (59, 61) zueinander, drei Bausatzteile umfassend, einschließlich:
eines ersten zusammenwirkenden Bauteils (13) und eines zweiten zusammenwirkenden Bauteils (15), wobei die zusammenwirkenden Bauteile (13, 15) mit einem zusätzlichen Führungsgestell bereitgestellt werden, das zur Führung einer relativen Bewegung der zusammenwirkenden Bauteile in Bezug aufeinander in eine festziehende Richtung (TD) ausgestaltet ist; und
einen Festziehauslöser (45), der ausgestaltet ist, um zur Bewirkung der relativen Bewegung der zusammenwirkenden Bauteile (13,15) in die festzuziehende Richtung (TD) ausgelöst zu werden; wobei
jedes der zusammenwirkenden Bauteile (13, 15) einen scheibenförmigen Abschnitt (17, 19) und ein Sperrelement (51, 53) aufweist, das dazu ausgestaltet ist, in ein Gegensperrelement (55, 57) sperrend einzugreifen, das in jeweils einem der Möbelstücke (59, 61) angebracht ist und ein zum Eingreifen in den Festziehauslöser (45) ausgestaltetes Eingriffselement (35, 37) umfasst,
wobei das Auslöser-Eingriffselement (35, 37) jedes zusammenwirkenden Bauteils (13, 15) einen Vorsprung umfasst, der sich im Wesentlichen senkrecht von dem scheibenförmigen Abschnitt (17, 19) erstreckt, wobei die scheibenförmigen Abschnitte (17, 19) beider zusammenwirkender Bauteile (13, 15) aus Metallblech gefertigt sind, und wobei jeder Vorsprung von dem Metallblech des jeweiligen scheibenförmigen Abschnitts (17, 19) freigeschnitten und weggebogen ist.

2. Festziehvorrichtungsbausatz nach Anspruch 1, wobei jedes der zusammenwirkenden Bauteile (13, 15) einen scheibenförmigen Abschnitt (17, 19) aufweist und das Sperrelement jedes zusammenwirkenden Bauteils (13, 15) als eine Sperrausbuchtung (51, 53) geformt ist und beide Sperrausbuchtungen (51, 53) sich von dem jeweiligen scheibenförmigen Abschnitt (17, 19) in dieselbe Richtung erstrecken.

3. Festziehvorrichtungsbausatz nach Anspruch 2, wobei beide Sperrausbuchtungen als Sperrklappen (51, 53) geformt sind, die so gestaltet und bemessen sind, dass sie innerhalb von Sperrschlitzen (55, 57) aufgenommen werden können, die in dem jeweiligen Möbelstück (59, 61) bereitgestellt werden.

4. Festziehvorrichtungsbausatz nach Anspruch 3, wobei die scheibenförmigen Abschnitte (17, 19) der beiden zusammenwirkenden Bauteile (13, 15) aus Metallblech gefertigt sind, und jede der Sperrklappen (51, 53) von dem jeweiligen Metallblech freigeschnitten und weggebogen ist.

5. Festziehvorrichtungsbausatz nach einem der Ansprüche 1 bis 4, wobei der FestziehAuslöser ein Schraubenbolzen (45) mit einem Bolzenkopf (47) und einem Bolzenabschnitt (49) ist, mindestens ein Endabschnitt des Bolzenabschnitts (49) ein außenseitiges Gewinde aufweist, und der Bolzenkopf (47) und der gewundene Endabschnitt in Bezug auf jeweils eines der Auslöser-Eingriffselemente (35, 37) zusammenwirken, um eine festziehende Bewegung der zusammenwirkenden Bauteile (13, 15) beim Rotieren des Schraubenbolzens (45) zu veranlassen.

6. Festziehvorrichtungsbausatz nach einem der Ansprüche 1 bis 5, wobei ein Vorsprung mit einem inneren Gewinde versehen wird, welches das Gewinde des gewundenen Endabschnitts des Schraubenbolzens (45) ergänzt, und der andere Vorsprung mit einer Durchgangsbohrung versehen wird, die zur Aufnahme des Bolzenabschnitts in Gleitpassung bemessen ist, ohne dass der Bolzenkopf die Bohrung passieren kann.

7. Festziehvorrichtungsbausatz nach Anspruch 6, wobei die Vorsprünge und die Sperrklappen (51, 53) sich von den scheibenförmigen Abschnitten (17, 19) in verschiedene Richtungen erstrecken, die im Wesentlichen einander entgegengesetzt verlaufen.

8. Festziehvorrichtungsbausatz nach einem der Ansprüche 1 bis 7, wobei das erste zusammenwirkende Bauteil (13) mit einem Paar parallel beabstandeter Führungsschienen (23) bereitgestellt und das zweite zusammenwirkende Bauteil (15) mit einem Paar parallel beabstandeter Führungsschienenmitnehmer (27, 29, 31) bereitgestellt werden, die zum gleitenden Eingreifen in die Führungsschienen (23) für eine relative Bewegung in die festziehende Richtung (TD) ausgestaltet sind.

9. Festziehvorrichtungsbausatz nach Anspruch 8, wobei die scheibenförmigen Abschnitte (17, 19) beider zusammenwirkender Bauteile (13, 15) aus Metallblech gefertigt sind, wobei die Führungsschienen (23) von den Rändern eines Ausschnitts (21) des scheibenförmigen Abschnitts (17, 19) des ersten zusammenwirkenden Bauteils (13) geformt sind, und die Führungsschienenmitnehmer ein mittleres Paar (27) und zwei äußere Paare (29, 31) querlaufender Seitenarme des scheibenförmigen Abschnitts (17, 19) des zweiten zusammenwirkenden Bauteils (15) umfassen, wobei die querlaufenden Seitenarme (27, 29, 31) eine querverlaufende Abmessung aufweisen, die größer ist als die querlaufende Abmessung des Ausschnitts (21) und der querlaufenden Seitenarme (27) des mittleren Paars einerseits und die querlaufenden Seitenarme (29, 31) der äußeren Paare andererseits so konstruiert sind, dass sie mit entgegengesetzten Oberflächen der jeweils benachbarten Führungsschienen (23) zusammenwirken.

10. Festziehvorrichtungsbausatz nach Anspruch 9, wobei der Ausschnitt (21) einen querlaufend vergrößerten Abschnitt (33) aufweist, der das Passieren der mittleren querlaufenden Seitenarme (27) erlaubt.

11. Festziehvorrichtungsbausatz nach einem der Ansprüche 1 bis 10, wobei der scheibenförmige Abschnitt (17) des ersten zusammenwirkenden Bauteils (13) mit einem verstärkenden Gefüge (59) bereitgestellt wird.

12. Festziehvorrichtung, die aus dem ersten und zweiten zusammenwirkenden Bauteil (13, 15) und dem Festzieh-Auslöser (45) des Festziehvorrichtungsbausatzes nach einem der Ansprüche 1 bis 11 gebildet wird.

13. Verfahren zum Festziehen zweier Möbelstücke (59, 61) zueinander in eine festziehende Richtung (TD), wobei jedes der Möbelstücke ein Gegensperrelement (55, 57) umfasst, das Verfahren folgende Schritte umfassend:
Bereitstellen einer Fes.tziehvorrichtung (11) nach Anspruch 12;
Versetzen des Sperrelements (51) eines (13) der zusammenwirkenden Bauteile (13, 15) in ein sperrendes Eingreifen mit dem Gegensperrelement (55) eines (59) der beiden Möbelstücke (59, 61);
Versetzen des Sperrelements (53) des anderen einen (15) der zusammenwirkenden Bauteile (13, 15) in ein sperrendes Eingreifen mit dem Gegensperrelement (57) des anderen einen (61) der beiden Möbelstücke (59, 61); und
Auslösen des Festzieh-Auslösers (45), um eine relative Bewegung der zusammenwirkenden Bauteile (13, 15) in die festziehende Richtung (TD) zu veranlassen.

## Revendications

1. Kit d'appareil de serrage pour serrer deux pièces d'ameublement (59, 61), l'une vers l'autre, comprenant trois parties de kit incluant :
un premier élément coopératif (13) et un second élément coopératif (15), lesdits éléments coopératifs (13, 15) étant pourvus d'une structure de guidage complémentaire adaptée pour guider un mouvement relatif desdits éléments coopératifs l'un relativement à l'autre dans une direction de serrage (TD) ; et
un actionneur de serrage (45) adapté pour être actionné pour entraîner ledit mouvement relatif desdits éléments coopératifs (13, 15) dans ladite direction de serrage (TD) ; dans lequel
chacun desdits éléments coopératifs (13, 15) possédant une portion en forme de plaque (17, 19) et une structure de verrouillage (51, 53) adaptée pour entrée en prise de verrouillage avec une contre-structure de verrouillage (55, 57) prévue sur une respective desdites pièces d'ameublement (59, 61), et possédant une structure d'entrée en prise (35, 37) adaptée pour entrer en prise avec ledit actionneur de serrage (45),
dans lequel la structure d'entrée en prise d'actionneur (35, 37) de chaque élément coopératif (13, 15) comprend un tenon s'étendant sensiblement verticalement à partir de la portion en forme de plaque (17, 19), les portions en forme de plaque (17, 19) des deux éléments coopératifs (13, 15) étant faites de tôle, dans lequel chaque tenon est libéré par découpage et plié pour s'éloigner de la tôle de la portion en forme de plaque respective (17, 19).

2. Kit d'appareil de serrage selon la revendication 1, dans lequel chacun desdits éléments coopératifs (13, 15) possède une portion en forme de plaque (17, 19) et la structure de verrouillage de chaque élément coopératif (13, 15) présente la forme d'une saillie de verrouillage (51, 53), les deux des saillies de verrouillage (51, 53) s'étendant dans la même direction à partir de la portion en forme de plaque respective (17, 19).

3. Kit d'appareil de serrage selon la revendication 2, dans lequel les deux saillies de verrouillage présentent la forme de volets de verrouillage (51, 53) conçus et dimensionnés pour être reçus à l'intérieur de fentes de verrouillage (55, 57) prévues dans la pièce respective d'ameublement (59, 61),

4. Kit d'appareil de serrage selon la revendication 3, dans lequel les portions en forme de plaque (17, 19) des deux éléments coopératifs (13, 15) sont faites de tôle, chacun des volets de verrouillage (51, 53) étant libéré par découpage et plié pour s'éloigner de la tôle respective.

5. Kit d'appareil de serrage selon l'une quelconque des revendications 1 à 4, dans lequel ledit actionneur de serrage est un boulon de vissage (45) possédant une tête de boulon (47) et une portion de boulon (49), au moins une section d'extrémité de la portion de boulon (49) possédant un filetage extérieur, la tête de boulon (47) et la section d'extrémité filetée coopérant avec une respective desdites structures d'entrée en prise d'actionneur (35, 37) pour entraîner un mouvement de serrage des éléments coopératifs (13, 15) lors de la rotation du boulon de vissage (45).

6. Kit d'appareil de serrage selon l'une quelconque des revendications 1 à 5, dans lequel un tenon est pourvu d'un filetage intérieur complémentaire au filetage de la section d'extrémité filetée du boulon de vissage (45) et l'autre tenon est pourvu d'un trou débouchant dimensionné pour recevoir la portion de boulon dans un ajustement coulissant mais ne permettant pas à la tête de boulon de passer.

7. Kit d'appareil de serrage selon la revendication 6, dans lequel lesdits tenons et les volets de verrouillage (51, 53) s'étendent à partir des portions en forme de plaque (17, 19) dans différentes directions qui sont sensiblement opposées les unes aux autres.

8. Kit d'appareil de serrage selon l'une quelconque des revendications 1 à 7, dans lequel le premier élément coopératif (13) est pourvu d'une paire de rails de guidage parallèles espacés l'un de l'autre (23) et le second élément coopératif (15) est pourvu d'une paire de suiveurs de rail de guidage parallèles espacés l'un de l'autre (27, 29, 31) adaptés pour être en prise coulissante avec les rails de guidage (23) pour un mouvement relatif dans la direction de serrage (TD).

9. Kit d'appareil de serrage selon la revendication 8, avec les portions en forme de plaque (17, 19) des deux éléments coopératifs (13, 15) faites de tôle, dans lequel les rails de guidage (23) sont formés par les bords d'une découpe (21) de la portion en forme de plaque (17, 19) du premier élément coopératif (13) et les suiveurs de rail de guidage comprennent une paire médiane (27) et deux paires extérieures (29, 31) de bras latéraux transversaux de la portion en forme de plaque (17, 19) du second élément coopératif (15), dans lequel les bras latéraux transversaux (27, 29, 31) possèdent une dimension transversale qui est supérieure à la dimension transversale de la découpe (21) et les bras latéraux transversaux (27) de la paire médiane, d'une part, et les bras latéraux transversaux (29, 31) des paires extérieures, d'autre part, sont structurés pour coopérer avec des surface opposées des rails de guidage respectivement adjacents (23).

10. Kit d'appareil de serrage selon la revendication 9, dans lequel la découpe (21) possède une portion agrandie transversalement (33) permettant le passage des bras latéraux transversaux médians (27).

11. Kit d'appareil de serrage selon l'une quelconque des revendications 1 à 10, dans lequel la portion en forme de plaque (17) du premier élément coopératif (13) est pourvue d'une structure de renfort (59).

12. Appareil de serrage constitué par lesdits premier et second éléments coopératifs (13, 15) et ledit actionneur de serrage (45) du kit d'appareil de serrage selon l'une quelconque des revendications 1 à 11.

13. Procédé de serrage, l'une vers l'autre, dans une direction de serrage (TD), de deux pièces d'ameublement (59, 61), dont chacune comprend une contre-structure de verrouillage (55, 57), comprenant les étapes de :
la fourniture d'un appareil de serrage (11) selon la revendication 12 ;
la mise de la structure de verrouillage (51) d'un (13) des éléments coopératifs (13, 15) en prise de verrouillage avec la contre-structure de verrouillage (55) d'une (59) des deux pièces d'ameublement (59, 61) ;
la mise de la structure de verrouillage (53) de l'autre (15) des éléments coopératifs (13, 15) en prise de verrouillage avec la contre-structure de verrouillage (57) de l'autre (61) des deux pièces d'ameublement (59, 61) ; et
l'actionnement de l'actionneur de serrage (45) pour entraîner un mouvement relatif desdits éléments coopératifs (13, 15) dans ladite direction de serrage (TD).
